(19) Europäisches Patentamt
European Patent Office
Office européen des brevets

(11) **EP 2 917 687 B1**

(12) **EUROPÄISCHE PATENTSCHRIFT**

(45) Veröffentlichungstag und Bekanntmachung des Hinweises auf die Patenterteilung:
**22.05.2019** **Patentblatt 2019/21**

(21) Anmeldenummer: **13774177.3**

(22) Anmeldetag: **09.10.2013**

(51) Int Cl.:
**G01B 11/14** *(2006.01)*      **G01B 11/02** *(2006.01)*
**G01B 11/10** *(2006.01)*

(86) Internationale Anmeldenummer:
**PCT/EP2013/071016**

(87) Internationale Veröffentlichungsnummer:
**WO 2014/072144 (15.05.2014 Gazette 2014/20)**

(54) **VERFAHREN ZUR BESTIMMUNG DER LAGE MINDESTENS EINER KANTE EINES GEGENSTANDES MITTELS AUSWERTUNG FRESNELSCHER BEUGUNGSSAUMVERLÄUFE**

METHOD FOR DETERMINING THE POSITION OF AT LEAST ONE EDGE OF AN OBJECT BY EVALUATING FRESNEL DIFFRACTION BORDER PROFILES

PROCÉDÉ DE DÉTERMINATION DE LA POSITION D'AU MOINS UN BORD D'UN OBJET, AU MOYEN DE L'ÉVALUATION DES VARIATIONS DES FRANGES DE DIFFRACTION DE FRESNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2012   DE 102012021892**

(43) Veröffentlichungstag der Anmeldung:
**16.09.2015   Patentblatt 2015/38**

(73) Patentinhaber: **SIKORA AG**
**28307 Bremen (DE)**

(72) Erfinder:
• **BLOHM, Werner**
**27632 Misselwarden (DE)**

• **SIKORA, Harald**
**28357 Bremen (DE)**

(74) Vertreter: **Hauck Patentanwaltspartnerschaft mbB**
**Postfach 11 31 53**
**20431 Hamburg (DE)**

(56) Entgegenhaltungen:
**EP-B1- 0 924 493        DE-A1- 10 360 690**
**JP-A- 2005 224 901      US-A- 3 982 816**
**US-A- 5 015 867         US-A1- 2005 117 162**

EP 2 917 687 B1

**Beschreibung**

Die Erfindung betrifft ein Verfahren zur Bestimmung der Lage mindestens einer Kante eines Gegenstandes, insbesondere eines Stranges. Bei einem solchen Strang kann es sich beispielsweise um ein Kabel handeln mit einem Leiter und einer diesen umhüllenden Isolierung. Es besteht ein Bedarf, derartige Stränge zu vermessen, insbesondere die Lage oder den Durchmesser zu bestimmen. Eine optische Vermessung von strangförmigen Gütern, bei denen durch kohärentes, monochromatisches Licht vorzugsweise einer Laserdiode auf einem Lichtsensor ein Schatten des zu messenden Stranges ohne abbildende Optiken projiziert wird, ist beispielsweise aus EP 0 924 493 B1 bekannt. Im Vergleich zu Messverfahren, die mit abbildenden Optiken arbeiten, sind mit diesem Verfahren bei vergleichsweise geringen Abmessungen der Anordnung hohe Messgenauigkeiten erzielbar. Aufgrund der kohärenten, monochromatischen Strahlung der Lichtquelle werden an den geometrischen Schattengrenzen des Strangs Beugungssäume erzeugt. Aus den aufgenommenen Beugungssäumen können diese geometrischen Schattengrenzen ermittelt werden. Dies ist zum Beispiel durch Vergleich mit einem aus der Theorie der Beugung bekannten Referenzbeugungsmuster möglich. Die freien Parameter dieses Referenzmusters, insbesondere Dehnung und örtliche Verschiebung, werden so lange variiert, bis sich eine optimale Korrelation zwischen dem Referenzbeugungsmuster und dem Verlauf der gemessenen Beugungssaumintensität einstellt. Diese Korrelation ist allerdings vergleichsweise rechenzeitintensiv, so dass alternativ die Lage charakteristischer Merkmalspunkte des Beugungssaums, zum Beispiel lokaler Intensitätsmaxima und -minima, ausgewertet werden und hieraus auf die Lage der geometrischen Schattengrenze geschlossen werden kann.

Ein Verfahren zur optischen Vermessung von Objekten und Bestimmung der geometrischen Schattengrenzen durch Auswertung der Fresnelschen Beugungssäume ist beispielsweise aus US 2005 117 162 A1 bekannt. Die geometrische Schattengrenze wird mit drei unterschiedlichen Methoden ermittelt, nämlich über die Bestimmung der Lage der Positionen der lokalen Maxima, Minima und Nullstellen des Beugungssaumverlaufs, durch Korrelation der gemessenen Beugungssaumintensität mit einem Referenzbeugungsmuster und durch die vereinfachende Annahme einer sinusoidalen Funktion mit Dämpfung für die gemessene Beugungssaumintensität und anschließende Fouriertransformation.

Während die Korrelationsmethode wie erwähnt sehr rechenzeitintensiv ist, ist die Auswertung charakteristischer Merkmalspunkte des Beugungssaums schnell und erreicht in den meisten Anwendungsfällen hervorragende Messgenauigkeiten. Da sich die Analyse allerdings auf eine begrenzte Anzahl von charakteristischen Merkmalspunkten des Beugungssaumes beschränkt, kann es zu fehlerhaften Ergebnissen kommen, wenn diese charakteristischen Merkmalspunkte gestört werden. Dies kann zum Beispiel bei einer erheblichen Verschmutzung des optischen Systems oder bei der Vermessung transparenter oder sehr dünner Stränge der Fall sein. So kann es beispielsweise durch Lichtanteile, die durch das transparente Messgut hindurch gelangen, zu Störungen der Beugungssäume und damit auch der charakteristischen Merkmalspunkte kommen. Bei sehr dünnen Strängen kann es zu Störungen aufgrund einer gegenseitigen Beeinflussung der beiden Beugungssäume kommen. Die Methode der Fouriertransformation, wie in US 2005 117 162 A1 beschrieben, ist ebenfalls sehr sensibel gegenüber der Qualität des Messsignals und damit gegenüber Störungen, wie sie beispielsweise bei der Vermessung transparenter oder sehr dünner Stränge auftreten können.

Ausgehend von dem erläuterten Stand der Technik liegt der Erfindung daher die Aufgabe zugrunde, ein Verfahren der eingangs genannten Art bereitzustellen, das zuverlässige Messergebnisse auch bei Störungen des Beugungssaums liefert und dabei eine hohe Mess- und Auswertegeschwindigkeit erreicht.

Die Erfindung löst diese Aufgabe durch die unabhängigen Ansprüche 1 und 2. Vorteilhafte Ausgestaltungen finden sich in den abhängigen Ansprüchen, der Beschreibung und den Figuren.

Die Erfindung löst die Aufgabe nach einem ersten Aspekt durch ein Verfahren zur Bestimmung der Lage mindestens einer Kante eines Gegenstandes, insbesondere eines Stranges, umfassend die Schritte:

- Beleuchten des Gegenstandes mit Licht mindestens einer kohärenten Lichtquelle, wobei an den beiden geometrischen Grenzen des vom Gegenstand verursachten Schattens Beugungssäume erzeugt werden,
- Aufnehmen des räumlichen Intensitätsverlaufs mindestens eines Beugungssaums mit mindestens einem ein- oder mehrzeiligen optischen Sensor,
- der mindestens eine aufgenommene Intensitätsverlauf wird nach dem Ort differenziert und über einer quadratischen Ortsachse aufgetragen,
- Vergleichen des nach dem Ort differenzierten und über der quadratischen Ortsachse aufgetragenen mindestens einen aufgenommenen Intensitätsverlaufs mit mindestens einem periodischen Referenzintensitätsverlauf,
- Bestimmen der Lage mindestens einer Kante des Gegenstandes auf Grundlage des erfolgten Vergleichs.

Die Erfindung löst die Aufgabe nach einem zweiten Aspekt durch ein Verfahren zur Bestimmung der Lage mindestens einer Kante eines Gegenstandes, insbesondere eines Stranges, umfassend die Schritte:

- Beleuchten des Gegenstandes mit Licht mindestens einer kohärenten Lichtquelle, wobei an den beiden geometrischen Grenzen des vom Gegenstand verursachten Schattens Beugungssäume erzeugt werden,
- Aufnehmen des räumlichen Intensitätsverlaufs mindestens eines Beugungssaums mit mindestens einem ein- oder mehrzeiligen optischen Sensor,
- der mindestens eine aufgenommene Intensitätsverlauf wird nach dem Ort differenziert,
- Vergleichen des nach dem Ort differenzierten mindestens einen aufgenommenen Intensitätsverlaufs mit mindestens einem Referenzintensitätsverlauf, wie er sich aus einer periodischen Funktion ergibt, wenn diese eine Periodenlänge mit einer im Wesentlichen umgekehrt linearen Abhängigkeit vom Ort besitzt,
- Bestimmen der Lage mindestens einer Kante des Gegenstandes auf Grundlage des erfolgten Vergleichs.

Nach einem nicht zur Erfindung gehörigen Beispiel kann ein Verfahren zur Bestimmung der Lage mindestens einer Kante eines Gegenstandes, insbesondere eines Stranges, die folgenden Schritte umfassen:

- Beleuchten des Gegenstandes mit Licht mindestens einer kohärenten Lichtquelle, wobei an den beiden geometrischen Grenzen des vom Gegenstand verursachten Schattens Beugungssäume erzeugt werden,
- Aufnehmen des räumlichen Intensitätsverlaufs mindestens eines Beugungssaums mit mindestens einem ein- oder mehrzeiligen optischen Sensor,
- Vergleichen des mindestens einen aufgenommenen Intensitätsverlaufs mit mindestens einem Referenzintensitätsverlauf, wie er sich aus einer periodischen Funktion ergibt, wenn diese eine Periodenlänge mit einer im Wesentlichen umgekehrt linearen Abhängigkeit vom Ort besitzt, und wenn die Funktion über den Ort integriert wird,
- Bestimmen der Lage mindestens einer Kante des Gegenstandes auf Grundlage des erfolgten Vergleichs.

Die geometrischen Schattengrenzen stellen eine unmittelbare Information über die Lage des Gegenstandes dar. Die Bestimmung der Lage des Gegenstandes umfasst dabei auch beispielsweise die Bestimmung der Lage nur einer Kante des Gegenstandes. Die Erfindung nutzt einen Messaufbau, wie er grundsätzlich aus EP 0 924 493 B1 bekannt ist. Der Gegenstand bzw. Strang kann im Querschnitt annähernd kreisförmig sein. Es kann sich um ein Kabel handeln, insbesondere um ein Kabel mit mindestens einem Leiter und mindestens einer diesen umgebenden Isolierumhüllung. Die mindestens eine kohärente Lichtquelle kann dabei insbesondere auch monochromatisches Licht aussenden. Bei der Lichtquelle kann es sich um einen Laser handeln, insbesondere einen Diodenlaser. Der optische Sensor kann beispielsweise ein CCD- oder CMOS-Sensor sein, insbesondere ein CCD- oder CMOS-Zeilensensor.

Gemäß der Erfindung werden die Fresnelschen Beugungsverläufe der Lichtintensität ausgewertet, die sich bei kohärenter Beleuchtung auf einem in nicht allzu großer Entfernung hinter dem Gegenstand liegenden Sensor einstellen. Diese Beugungsverläufe lassen sich über die Fresnelschen Integrale mathematisch beschreiben. Für diese Integrale existiert allerdings keine geschlossene analytische Lösung, aus der sich Beugungssaum-Referenzintensitätsverläufe einfach berechnen ließen. Wie eingangs erwähnt, ist aus EP 0 924 493 B1 ein Korrelationsverfahren bekannt, bei dem die gemessenen Beugungssaumverläufe mit Referenzverläufen verglichen werden. Dieses Verfahren ist jedoch für Messgenauigkeiten im SubMikrometerbereich unpraktikabel, weil eine sehr große Anzahl von Referenzverläufen abzuspeichern ist.

Die Bestimmung der Lage des Gegenstandes erfolgt erfindungsgemäß auf Grundlage eines Vergleichs bzw. einer Korrelation zwischen dem mindestens einen aufgenommenen Intensitätsverlauf und mindestens einem Referenzintensitätsverlauf. Dem Referenzintensitätsverlauf können beispielsweise empirisch eine bestimmte geometrische Schattengrenze und damit eine bestimmte Lage des Gegenstandes zugeordnet worden sein. Allen Aspekten der Erfindung liegt die gemeinsame Erkenntnis zugrunde, dass die Periodendauer der aufgenommenen Beugungssaumverläufe eine umgekehrt lineare bzw. nahezu umgekehrt lineare Abhängigkeit von der Ortskoordinate auf dem verwendeten Sensor aufweist. Die Periodendauer nimmt also mit $1/(x-x_{geo})$ ab, wobei x der Ort und $x_{geo}$ die Position der geometrischen Schattengrenze ist. Die gemessenen Intensitätsverläufe können daher mit Referenzintensitätsverläufen verglichen werden, die ebenfalls eine solche umgekehrt lineare bzw. nahezu umgekehrt lineare Abhängigkeit ihrer Periodendauer von der Ortskoordinate besitzen. In dem Argument der Funktionen der Referenzintensitätsverläufe taucht dann insbesondere die Ortskoordinate x zum Quadrat auf.

Der Erfindung nach allen Aspekten liegt darüber hinaus die gemeinsame Erkenntnis zugrunde, dass sich aus dem an einer Kante verursachten aufgenommenen Beugungssaumverlauf $I(x)$ durch Differentiation bzw. Ableitung nach dem Ort einerseits und einem Auftragen über einer quadratischen x-Achse andererseits, eine periodische Funktion erzeugen lässt, die insbesondere eine Sinusfunktion sehr gut annähert. Das letztere Verhalten (Auftragen über quadratische Ortsachse liefert periodischen Verlauf) legt nahe, dass der Ort x im Argument der periodischen Funktion

$$\frac{dI}{dx} = F(V(x))$$ zum Quadrat auftritt, mithin gilt $V(x) = x^2$. Für den abgeleiteten Beugungssaumverlauf an einer Kante gilt also bei Annäherung über eine Sinusfunktion:

$$\frac{dI}{dx} \approx A \cdot \sin(kx^2 + \varphi)$$

Entsprechend kann über eine Sinusfunktion ein Referenzverlauf $I_{Ref}(x)$ erzeugt werden, der dem aufgenommenen Intensitätsverlauf sehr gut entspricht. Dazu ist der Ort $x$ im Argument der Sinusfunktion zum Quadrat anzusetzen und anschließend sind die Funktionswerte über den Ort zu integrieren:

$$I_{Ref}(x) = \int \sin(kx^2 + \varphi)\, dx \qquad\qquad \text{Gl. (1)}$$

Bei dem ersten Aspekt der Erfindung werden die beiden oben angeführten Operationen (Differentiation nach dem Ort und Auftragen über eine quadratische Ortsachse) auf den aufgenommenen Intensitätsverlauf angewendet und dieser wird direkt mit einer periodischen Funktion, beispielsweise einer Sinusfunktion, verglichen. Bei dem zweiten Aspekt der Erfindung wird die erste der beiden Operationen, nämlich die Differentiation nach dem Ort, auf den aufgenommenen Intensitätsverlauf angewendet. Der so erhaltene Intensitätsverlauf wird mit einem Referenzintensitätsverlauf verglichen, wie er sich z.B. aus einer Sinusfunktion ergibt, in deren Argument der Ort $x$ zum Quadrat auftritt. Der Referenzintensitätsverlauf ist in diesem Falle also ein Verlauf, dessen Periodenlänge eine umgekehrt lineare Abhängigkeit vom Ort besitzt. Nach einem anderen nicht zur Erfindung gehörigen Beispiel kann im Gegensatz zum zweiten Aspekt die Differentiation des aufgenommenen Intensitätsverlaufs nach dem Ort durch eine Integration über den Ort bei der Erzeugung des Referenzintensitätsverlaufs ersetzt werden. Bei diesem Beispiel wird der Referenzintensitätsverlauf mithin also entsprechend Gleichung (1) erzeugt.

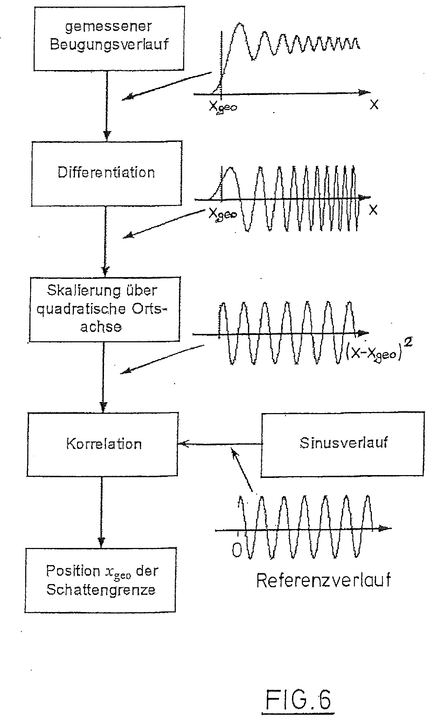

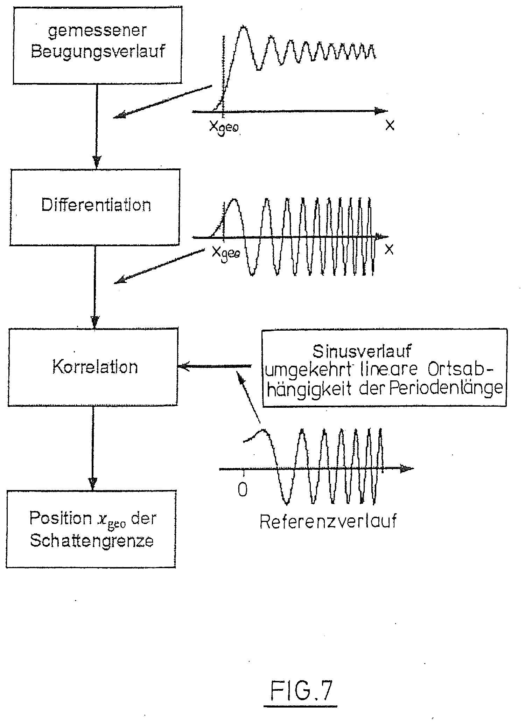

Die Erfindung wird nachfolgend mit Bezug auf die Figuren 6 und 7 näher erläutert.

Es wird deutlich, dass allen Aspekten der Erfindung die gleiche Erkenntnis zugrunde liegt. Der Unterschied liegt lediglich darin, ob und wie weit der gemessene Intensitätsverlauf vor dem Vergleich einer Operation, insbesondere einer mathematischen Operation, unterzogen wird. Entsprechend wird dann der für den Vergleich herangezogene Referenzintensitätsverlauf ausgewählt. Es versteht sich, dass die Referenzintensitätsverläufe insbesondere bei dem zweiten Aspekt der Erfindung nicht tatsächlich der Umkehrung zu der ersten Operation unterzogen werden müssen. Vielmehr können sie für das erfindungsgemäße Verfahren bereits als gespeicherte Referenzverläufe vorliegen. Sie entsprechen aber Funktionen, die sich ausgehend von einer periodischen Funktion, beispielsweise einer periodischen Sinusfunktion, durch Anwenden einer r mathematischen Umkehrfunktion ergeben würden. Auch versteht sich, dass einige oder sämtliche der Verfahrensschritte der Erfindung nach einem oder mehreren, insbesondere sämtlichen Aspekten der Erfindung auch parallel, d.h. abschnittsweise oder vollständig gleichzeitig, ausgeführt werden können.

Eine periodische Funktion, beispielsweise eine Sinusfunktion ist erheblich einfacher auszuwerten als andere Funktionen, insbesondere bei transparenten oder sehr dünnen Gegenständen, indem der mindestens eine aufgenommene Intensitätsverlauf mit einem periodischen Referenzintensitätsverlauf, insbesondere einem sinusförmigen Referenzintensitätsverlauf verglichen bzw. korreliert wird. Insbesondere wenn der ursprünglich aufgenommene Intensitätsverlauf erhebliche Störungen aufweist, die die Auswertung erschweren oder gar unmöglich machen würden, lässt sich durch die erste Ableitung der Intensitätsverläufe nach dem Ort und das Auftragen über eine quadrierte Ortsachse ein Verlauf erzeugen, der sich sehr gut an einen Sinusverlauf annähern lässt. Wesentliche Informationen dieses Sinusverlaufs, wie Phasenlage und Frequenz, lassen sich auch bei Vorliegen eines stark gestörten aufgenommenen Beugungssaumverlaufs extrahieren. Wie erläutert, liegt der Erfindung die Erkenntnis zugrunde, dass sich die Periodendauer der Intensitätsschwankungen im Fresnelschen Beugungsmuster einer Kante umgekehrt linear mit dem Ort und insbesondere mit dem Abstand zur geometrischen Schattengrenze ändert. Auf Grundlage dieser Erkenntnis lassen sich die für die Korrelation nötigen Referenzverläufe zur Laufzeit generieren. Die Korrelation ist damit nicht an zuvor für diskrete Kantenpositionen abgelegte Referenzverläufe gebunden, sondern kann für jede beliebige Kantenposition mit der erforderlichen Positionsgenauigkeit durchgeführt werden. Dies erlaubt es, die gewünschte hohe Messgenauigkeit für die Durchmessermessung zu erreichen.

Beugungssaum-Referenzverläufe, die den theoretisch exakten Verlauf sehr gut annähern, lassen sich (zur Laufzeit) erzeugen, indem man für die örtliche Ableitung der Lichtintensität $I$ die folgende Gleichung ansetzt:

$$\frac{dI_{Ref}}{dx} = \sin\left[2\pi \cdot \frac{1}{T(\Delta x)} \cdot (x - x_{geo}) + \frac{\pi}{4}\right], \qquad\qquad \text{Gl. (2)}$$

wobei $T$ die Periodenlänge und $x_{geo}$ die Position der geometrischen Schattengrenze des vom Gegenstand verursachten Schattens darstellen. Für die ortsabhängige Periodenlänge $T(\Delta x)$ gilt: $T(\Delta x) = T_0/(x - x_{geo})$, wobei $T_0$ eine im Weiteren erläuterte Konstante darstellt.

Einen mit dem gemessenen Intensitätsverlauf zu vergleichenden Referenzintensitätsverlauf erhält man beispielsweise, indem der Verlauf nach Gl. (2) numerisch integriert wird. Auf diese Weise lässt sich im Vergleich zum Stand der Technik die Auswertung einfacher und schneller durchführen. Dies gilt insbesondere auch bei Störungen der Beugungssäume, die zum Beispiel bei transparenten Strängen oder sehr dünnen Strängen (weniger als 1 mm, insbesondere weniger als 0,5 mm Durchmesser) auftreten.

Bei der Herstellung von Kabeln wird beispielsweise durch einen Extrusionsprozess eine Isolierumhüllung auf den elektrischen Leiter aufgebracht. Dabei werden hohe Produktionsgeschwindigkeiten erreicht. Es ist in der Regel erforderlich, die Lage des Gegenstandes, und damit auch die ordnungsgemäße Isolierung, zu überprüfen. Die Überprüfung erfolgt dabei vorzugsweise während der Produktion, also online. Insbesondere kann der Gegenstand entlang seiner Längsrichtung gefördert werden, wobei währenddessen fortlaufend die Lage des Gegenstandes bestimmt wird. Es erfolgt also fortlaufend eine Beleuchtung des Gegenstandes und Aufnahme der Intensitätsverläufe der Beugungssäume sowie die erfindungsgemäße Auswertung derselben. Es ist also eine Online-Überwachung der Lage und/oder des Durchmessers möglich. Die Messung der Intensitätsverläufe und die erfindungsgemäße Auswertung können dabei zum Beispiel in regelmäßigen Abständen oder soweit wie möglich kontinuierlich erfolgen.

Mittels des erfindungsgemäßen Vergleichs können unterschiedliche Informationen gewonnen werden. Beispielsweise können zur Bestimmung des Durchmessers des Gegenstandes beide geometrischen Schattengrenzen des vom Gegenstand verursachten Schattens bestimmt werden. Der Gegenstand wirft einen Schatten, wenn er mit Licht beleuchtet wird. Die beiden durch einen Gegenstand bei einer insbesondere senkrecht zu seiner Längsrichtung erfolgenden Beleuchtung erzeugten Schattengrenzen geben wichtige Informationen über den Durchmesser des Gegenstandes. Aufgrund der Beugungseffekte können die geometrischen Schattengrenzen nicht unmittelbar auf dem optischen Sensor abgelesen werden, sondern müssen in der erfindungsgemäßen Weise ausgewertet werden. Aus einem Beugungssaum kann jeweils eine geometrische Schattengrenze ermittelt werden. Werden beide bei einer Beleuchtung des Gegenstandes entstehenden Beugungssäume ausgewertet, können also beide geometrischen Schattengrenzen, bzw. ihre Positionen, ermittelt werden. Grundsätzlich können die beiden Beugungssäume der beiden beugenden Ränder des beleuchteten Gegenstandes separat oder gemeinsam ausgewertet werden. Insbesondere kann zum Beispiel eine Korrelation bzw. ein Vergleich jeweils eines Beugungssaums mit einem entsprechenden Referenzintensitätsverlauf erfolgen. Alternativ können die beiden messtechnisch aufgenommenen Beugungssäume auch gemeinsam mit einem entsprechenden Referenzintensitätsverlauf für beide Ränder des Gegenstandes korreliert bzw. verglichen werden.

Mathematisch lässt sich für die Ortsableitung des aufgenommenen Beugungssaumverlaufs folgende Näherung angeben:

$$\frac{dI}{dx} \approx A \cdot \sin\left[ 2\pi \cdot \frac{1}{T_0} \cdot (x - x_{geo})^2 + \frac{\pi}{4} \right]$$

Wobei gilt:

$I$: Lichtintensität
$A$: Amplitudenkoeffizient
$x$: Ortsachse (Position)
$x_{geo}$: geometrische Schattengrenze
$T_0$: Periodenlänge des Sinusverlaufs

Die Periodenlänge $T_0$ ist abhängig von der Position der beugenden Kante des Gegenstandes im Messraum.

Beispielsweise durch Korrelation der Ortsableitung $\frac{dI}{dx}$ des gemessenen Beugungssaumverlaufs $I$ mit Referenzsinusverläufen nach Gl. (2), indem die freien Parameter $T_0$ und $x_{geo}$ variiert werden, lassen sich die geometrische Schattengrenze $x_{geo}$ und zum anderen die Periodenlänge $T_0$ bestimmen. Es muss also eine zweidimensionale Korrelation erfolgen.

Führt man eine ortsabhängige Frequenz $f = 1/T_0 \cdot (x - x_{geo})$ ein, lässt sich die geometrische Schattengrenze $x_{geo}$ als Phasenverschiebung $\varphi$ des Sinusverlaufs interpretieren:

$$\frac{dI}{dx} \approx A \cdot \sin\left[ 2\pi \cdot \underbrace{\frac{1}{T_0} \cdot (x - x_{\text{geo}})}_{f(\Delta x)} \cdot (x - x_{\text{geo}}) + \pi/4 \right]$$

$$\frac{dI}{dx} \approx A \cdot \sin\left[ 2\pi \cdot f(\Delta x) \cdot x \underbrace{- 2\pi \cdot f(\Delta x) \cdot x_{\text{geo}} + \pi/4}_{= \varphi(\Delta x)} \right]$$

Werden die Frequenz $f_0 = 1/T_0$ und die Phasenverschiebung $\varphi$ des aufgenommenen Beugungssaumverlaufs bestimmt, gibt dies zum einen unmittelbaren Rückschluss auf die Position $x_{\text{geo}}$ der geometrischen Schattengrenze und zum anderen auf die Position des die Beugung verursachenden Gegenstandes im Messraum. Wird diese Auswertung für beide aufgenommenen Beugungssäume durchgeführt, können hieraus der Durchmesser des Gegenstandes und die Position des Gegenstandes im Messraum bestimmt werden.

Wie bereits erwähnt, kann der mindestens eine periodische Referenzintensitätsverlauf ein sinusförmiger Referenzintensitätsverlauf sein bzw. die periodische Funktion kann eine Sinusfunktion sein. Eine Auswertung ist dann besonders einfach und schnell möglich. Es ist aber auch möglich, dass der mindestens eine periodische Referenzintensitätsverlauf ein periodischer Rechteck-, Dreieck- oder Trapezverlauf ist und/oder dass die periodische Funktion eine periodische Rechteck-, Dreieck- oder Trapezfunktion ist. Auch kann vor dem Vergleich mit dem Referenzintensitätsverlauf durch Amplitudenbegrenzung ein binäres Signal aus dem aufgenommenen Intensitätsverlauf erzeugt werden. Für die Binärisierung kann beispielsweise nach der Ableitung nach dem Ort und/oder nach dem Skalieren über die quadratische Ortsachse eine Intensitätsschwelle definiert werden. Sofern das Intensitätssignal oberhalb der Schwelle liegt, wird das binärisierte Intensitätssignal auf 1 gesetzt, sofern das Intensitätssignal unterhalb der Schwelle liegt, wird das binärisierte Intensitätssignal auf 0 gesetzt. Ein solcher Rechteckverlauf vereinfacht und beschleunigt die Auswertung, da solche digitalen Signale einfacher zu verarbeiten sind. Dies gilt insbesondere bei der Verarbeitung in einer digitalen Phasenregelschleife.

Im Zuge des erfindungsgemäßen Vergleichs kann ein die jeweilige geometrische Grenze des durch den Gegenstand verursachten Schattens charakterisierender Parameter des mindestens einen aufgenommenen Intensitätsverlaufs und/oder des mindestens einen Referenzintensitätsverlaufs bis zu einer möglichst weitgehenden Übereinstimmung der miteinander verglichenen Intensitätsverläufe variiert werden. Im Rahmen des Korrelationsverfahrens kann die Variation des die geometrische Grenze des durch den Gegenstand verursachten Schattens charakterisierenden Parameters dabei jeweils mit dem Wert beginnen, der bei einer unmittelbar vorangegangenen Variation zu einer möglichst weitgehenden Übereinstimmung mit dem Referenzintensitätsverlauf geführt hat. Der Vergleich wird bei dieser Ausgestaltung also jeweils mit dem Parameter begonnen, der bei der letzten Messung dem Referenzintensitätsverlauf am besten entsprach. Es wird hierbei ausgenutzt, dass sich zwischen insbesondere in kurzen Abständen aufeinanderfolgenden Messungen die Lage und der Durchmesser des Gegenstandes und damit die entscheidenden Parameter des Intensitätsverlaufs nur geringfügig ändern. Der Ausgangspunkt für den Vergleich liegt daher bereits relativ nahe am gesuchten Ergebnis. Hierdurch kann der mit der Auswertung verbundene zeitliche und rechnerische Aufwand verringert werden. Bei dem ersten Vergleich, wenn also noch kein "letzter Parameter" vorliegt, kann mit einem vorab definierten Standardwert begonnen werden.

Als die jeweilige geometrische Grenze des durch den Gegenstand verursachten Schattens charakterisierender Parameter kann im Zuge des erfindungsgemäß durchgeführten Vergleichs insbesondere die Phasenlage des mindestens einen aufgenommenen Intensitätsverlaufs und/oder des mindestens einen Referenzintensitätsverlaufs variiert werden. Beispielsweise bei dem ersten Aspekt der Erfindung kann diese Variation anhand des nach dem Ort differenzierten aufgenommenen Intensitätsverlaufs erfolgen bis sich eine Sinusfunktion ergibt. Dies ist nach den obigen Gleichungen der Fall, wenn der Ursprung der Ortsachse der geometrischen Schattengrenze entspricht. Die Phasenlage korreliert also unmittelbar mit der geometrischen Schattengrenze. Durch Korrelation kann ein Sinusreferenzverlauf gesucht werden, der dieser sich ergebenden Sinusfunktion optimal entspricht. Daraus kann der absolute Wert der geometrischen Schattengrenze ermittelt werden. Auch kann im Zuge des erfindungsgemäß durchgeführten Vergleichs die Frequenz des mindestens einen aufgenommenen Intensitätsverlaufs und/oder des mindestens einen Referenzintensitätsverlaufs variiert werden. Die Frequenz korreliert unmittelbar mit der Position des Gegenstandes im Messraum des optischen Sensors.

Die Berücksichtigung sowohl der geometrischen Schattengrenzen als auch der Position, insbesondere des Abstands des Gegenstandes vom Sensor, kann insbesondere für die Ermittlung des Durchmessers des Gegenstandes erforderlich sein. Dieser Abstand unterliegt insbesondere bei einer Vorbewegung des Gegenstands naturgemäß Schwankungen, so dass eine fortlaufende Überwachung des Abstands erforderlich sein kann. Sofern sowohl die geometrische Schattengrenze als auch die Position durch eine Korrelation ermittelt werden sollen, muss wie erläutert ein zweidimensionaler Vergleich bzw. eine zweidimensionale Korrelation durchgeführt werden. Dies ist vergleichsweise rechenzeitintensiv und stellt daher insbesondere bei hohen Produktionsgeschwindigkeiten erhebliche Anforderungen. Es kann daher vorgesehen sein, dass der Gegenstand mit Licht mindestens einer zweiten kohärenten Lichtquelle beleuchtet wird, deren Hauptstrahlrichtung im Wesentlichen senkrecht zu der Hauptstrahlrichtung der ersten kohärenten Lichtquelle ist, wobei auch durch die zweite kohärente Lichtquelle an den beiden geometrischen Grenzen des vom Gegenstand verursachten Schattens Beugungssäume erzeugt werden, wobei der räumliche Intensitätsverlauf mindestens eines durch die zweite kohärente Lichtquelle erzeugten Beugungssaums mit mindestens einem zweiten ein- oder mehrzeiligen optischen Sensor aufgenommen wird, und dass hieraus der Abstand des Gegenstandes von dem ersten optischen Sensor bestimmt wird. Auf diese Weise kann besonders einfach die Position des Gegenstandes im Messraum ermittelt werden, insbesondere aus den durch die zweite Lichtquelle erzeugten zweiten Beugungssäumen. Die Frequenz $f_0 = 1/T_0$ des erfindungsgemäß ausgewerteten Beugungssaumverlaufs ist somit bereits bekannt. Der erforderliche Vergleich bzw. die erforderliche Korrelation würde sich dann auf die Phasenverschiebung bzw. geometrische Schattengrenze beschränken. Es handelt sich dann nur noch um eine eindimensionale Korrelation, die entsprechend weniger rechenzeitintensiv ist.

Der Vergleich bzw. die Korrelation des mindestens einen aufgenommen Intensitätsverlaufs mit dem Referenzintensitätsverlauf kann mittels einer Phasenregelschleife (Phase Locked Loop PLL) erfolgen. Mit derartigen Phasenregelschleifen kann schnell eine erforderliche Variation der Frequenz und/oder der Phasenlage ermittelt werden, um eine möglichst weitgehende Übereinstimmung des aufgenommenen und gegebenenfalls mathematisch bearbeiten Intensitätsverlaufs mit einem periodischen Referenzverlauf, insbesondere einem sinusförmigen Referenzverlauf, zu erhalten. Gemäß einer weiteren Ausgestaltung kann der Vergleich des mindestens einen aufgenommen Intensitätsverlaufs mit dem Referenzintensitätsverlauf auch mittels einer Fourieranalyse erfolgen.

Die Hauptstrahlrichtung der mindestens einen kohärenten Lichtquelle kann im Wesentlichen senkrecht zu der Längsrichtung des Gegenstandes sein. Die mindestens eine kohärente Lichtquelle kann im Wesentlichen punktförmig sein. Alternativ oder zusätzlich kann die mindestens eine kohärente Lichtquelle den Gegenstand mit einem fächerförmigen Lichtstrahl beleuchten. Sofern mehrere Lichtquellen vorgesehen sind, kann dies jeweils für sämtliche Lichtquellen gelten. Weiterhin kann vorgesehen sein, dass zwischen der mindestens einen kohärenten Lichtquelle und dem Gegenstand und/oder zwischen dem Gegenstand und dem mindestens einen optischen Sensor keine die Lichtstrahlung verformenden oder ablenkenden optischen Elemente vorgesehen sind. Insbesondere sind bei dieser Ausgestaltung keine abbildenden Optiken zwischen der mindestens einen kohärenten Lichtquelle und dem Gegenstand und/oder zwischen dem Gegenstand und dem mindestens einen optischen Sensor vorgesehen. Hierdurch ergibt sich ein einfacherer und kompakterer Aufbau, während die erfindungsgemäße Auswertemethode gleichzeitig eine sichere Bestimmung der Lage und/oder des Durchmessers des Gegenstandes ermöglicht.

Bei dem mindestens einen optischen Sensor kann es sich, wie bereits erwähnt, um einen Zeilensensor handeln. Der mindestens eine optische Sensor kann der mindestens einen kohärenten Lichtquelle gegenüberliegend angeordnet sein. Außerdem kann die Messachse des mindestens einen optischen Sensors im Wesentlichen senkrecht zu der Hauptstrahlrichtung der mindestens einen kohärenten Lichtquelle sein. Die Messachse wird dabei insbesondere durch die Zeilenrichtung des Sensors definiert. Natürlich ist auch der Einsatz eines mehrzeiligen Sensors (Flächenarray-Sensor) möglich. Dann ist eine Mehrzahl von Zeilen senkrecht zur Hauptstrahlrichtung der Lichtquelle ausgerichtet. Bei Flächenarray-Sensoren kann jede Zeile einzeln ausgewertet werden.

Der Gegenstand kann zumindest teilweise transparent zumindest für das Licht der mindestens einen kohärenten Lichtquelle sein. Auch kann der Gegenstand einen Durchmesser von weniger als 1 mm, vorzugsweise weniger als 0,5 mm, besitzen. Wie bereits erläutert, ist die erfindungsgemäße Auswertemethode insbesondere bei transparenten und sehr dünnen Strängen vorteilhaft, die bei konventionellen Auswertemethoden Fehler erzeugen.

Das erfindungsgemäße Verfahren nutzt nahezu den gesamten Informationsgehalt des Beugungssaumes, ist also extrem schmalbandig. Störungen des Beugungssaumes, wie eingangs geschildert, haben praktisch keinen oder nur geringen Einfluss auf das Ergebnis der Analyse, insbesondere die Auswertung der geometrischen Schattengrenzen, weil das Frequenzspektrum der Störungen überwiegend außerhalb des durch die erfindungsgemäße Auswertung bereitgestellten schmalbandigen Filters liegt. Mit dem erfindungsgemäßen Verfahren wird die Bestimmung der Schattengrenzen und damit des Durchmessers deutlich präziser und störunanfälliger als beim Stand der Technik. Die Messgenauigkeit und die Zuverlässigkeit werden erhöht. Außerdem wird der Anwendungsbereich derartiger Auswerteverfahren erweitert und gestattet insbesondere auch die Messung von transparenten Produkten, wie zum Beispiel Glasfasern, Stäben, Schläuchen oder dergleichen.

Ein Ausführungsbeispiel der Erfindung wird nachfolgend anhand von Figuren näher erläutert. Es zeigen schematisch:

Fig. 1    eine Messvorrichtung zur Durchführung des erfindungsgemäßen Verfahrens,

Fig. 2    eine idealisierte Darstellung des Intensitätsverlaufs am optischen Sensor nach Fig. 1,

Fig. 3    drei Diagramme zur Veranschaulichung des erfindungsgemäßen Auswerteverfahrens,

Fig. 4    eine schematische Darstellung einer erfindungsgemäßen Phasenregelschleife

Fig. 5    eine weitere Ausgestaltung einer Vorrichtung zur Durchführung des erfindungsgemäßen Verfahrens,

Fig. 6    ein Diagramm zur Veranschaulichung des ersten Aspekts der Erfindung,

Fig. 7    ein Diagramm zur Veranschaulichung des zweiten Aspekts der Erfindung.

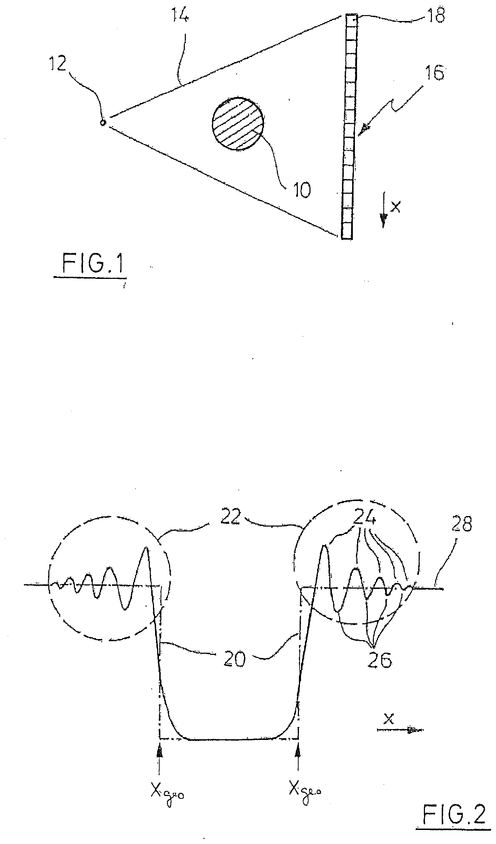

Soweit nichts anderes angeben ist, bezeichnen in den Figuren gleiche Bezugszeichen gleiche Gegenstände. In Fig. 1 ist der Querschnitt eines Stranges 10, beispielsweise eines Kabels 10, zu erkennen, welches sich senkrecht zur Zeichenebene erstreckt und gefördert wird, beispielsweise mit 10 mm pro Sekunde bis 30 m pro Sekunde. Die Vorrichtung zur Herstellung des Kabels sowie zur Erzeugung seines Vorschubs ist nicht dargestellt, da sie dem Fachmann grundsätzlich bekannt ist. Der Strang 10 kann beispielsweise einen Durchmesser von weniger als 1 mm, vorzugsweise weniger als 0,5 mm besitzen. Auch ist es möglich, dass es sich bei dem Strang 10 um einen transparenten Strang 10 handelt.

Auf der in Fig. 1 linken Seite des Stranges 10 ist eine punktförmige Lichtquelle 12 zu erkennen. Sie kann von einer Laserdiode gebildet sein, die zum Beispiel Infrarotlicht erzeugt. Die Lichtquelle 12 ist insbesondere in der durch einen fächerförmigen von der Lichtquelle 12 ausgesandten Lichtstrahl 14 gebildeten Messebene punktförmig. In dieser Ebene kann die Ausdehnung der aktiven Zone der Lichtquelle 12, insbesondere der Laserdiode 12, möglichst gering sein. Senkrecht dazu, d.h. parallel zur Längsachse des Stranges 10, kann eine größere Erstreckung der optisch aktiven Zone der Lichtquelle 12 von beispielsweise 0,5 mm vorliegen.

Auf der der Lichtquelle 12 gegenüberliegenden Seite des Stranges 10 ist ein optischer Sensor 16, beispielsweise ein CCD-Zeilensensor 16, dargestellt, dessen durch die Sensorzeile gebildete Längsachse in der Bildebene liegt und senkrecht zu der Hauptstrahlrichtung der Lichtquelle 12 verläuft. Die einzelnen Sensorelemente 18 des Sensors 16 sind dazu ausgebildet, das von der Lichtquelle 12 ausgesandte Laserlicht aufzunehmen. Der durch den fächerförmigen Strahl 14 der Lichtquelle 12 beleuchtete Strang 10 erzeugt einen Schatten auf dem Zeilensensor 16, dessen Ausdehnung für den Durchmesser des Stranges 10 repräsentativ ist. Die Ausdehnung des Schattens ist allerdings aufgrund des sich fächerförmig aufweitenden Strahlengangs nicht gleich dem Durchmesser des Stranges 10. Der Abstand der Längsachse des Stranges 10 zum Zeilensensor 16 ist daher bei der Auswertung zu berücksichtigen, und zwar in der Art, dass die gemessene Schattenausdehnung mit einem sich aus dem Strahlensatz ableitenden Faktor, der insbesondere kleiner 1 ist, zu multiplizieren ist. Da die Ersatz-Schattenblende relativ zum Mittelpunkt des Strangquerschnitts ebenfalls mit dem Abstand zwischen Lichtquelle 12 und Strang 10 variiert, ist diese Abhängigkeit ebenfalls zu berücksichtigen.

Die Lichtquelle 12, insbesondere die Laserdiode 12, sendet kohärentes, monochromatisches Licht aus. An den äußeren Rändern des Stranges 10 erfährt das kohärente, monochromatische Licht eine Beugung. Hieraus ergibt sich ein Intensitätsverlauf auf dem optischen Sensor 16, wie er in Fig. 2 idealisiert dargestellt ist. Die in Fig. 2 von links nach rechts dargestellte Ortsachse x verläuft in Fig. 1 von oben nach unten. Der Verlauf des durch den Strang 10 gebildeten geometrischen Schattens, wie er sich ohne Beugungserscheinungen einstellen würde, ist in Fig. 2 gestrichelt eingezeichnet und mit 20 bezeichnet. Die so gebildeten geometrischen Schattengrenzen $x_{geo}$ sind aufgrund der Beugungserscheinungen auf dem optischen Sensor 16 nicht unmittelbar messbar. Neben in den geometrischen Schattenbereich eingebeugtem Licht werden links bzw. rechts der geometrischen Schattengrenzen $x_{geo}$ Intensitätsverläufe mit langsam abklingenden, abwechselnd aufeinanderfolgenden Intensitätsmaxima und -minima registriert. Dieses sich aufgrund von Laufzeitunterschieden (Interferenz) ergebende Muster wird als Beugungssaum 22 bezeichnet. Die sich durch Überlagerung einzelner Lichtstrahlen einstellenden Maxima sind mit 24, die auf Auslöschung beruhenden Minima mit 26 bezeichnet. Die Frequenz, mit der die Maxima 24 und Minima 26 aufeinander folgen, ist vom Abstand zwischen dem beugenden Rand des Strangs 10 und der Messebene des Sensors 16 abhängig. Der Intensitätsverlauf im Beugungssaum 22 variiert um einen mittleren Pegel 28, wie er sich ohne Messobjekt einstellen würde.

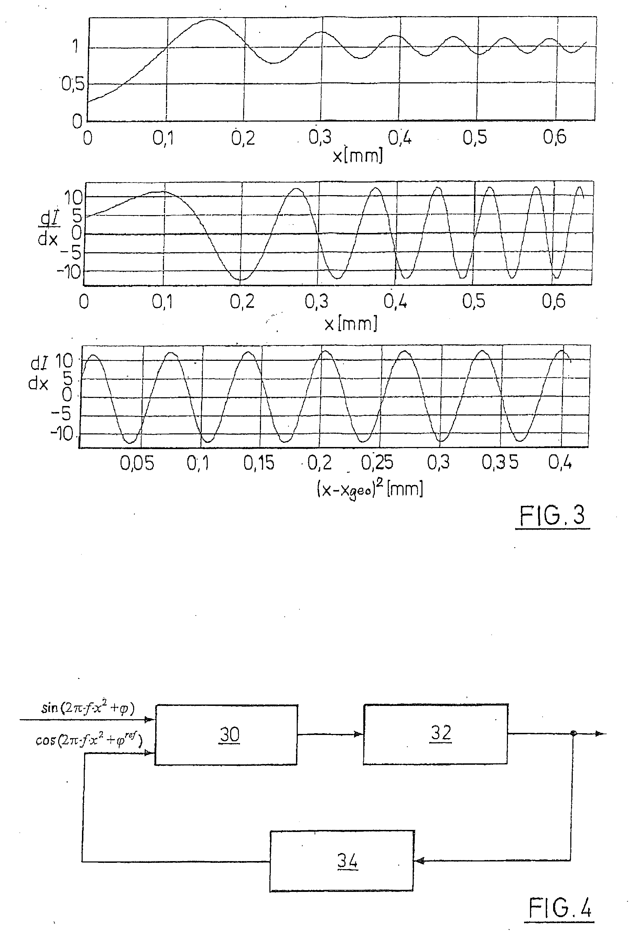

Anhand der in Fig. 3 dargestellten Diagramme soll das erfindungsgemäße Auswerteverfahren näher erläutert werden. Dabei ist in dem oberen Diagramm in Fig. 3 ein Beugungssaum aus Fig. 2 dargestellt. Insbesondere ist die Intensität I über dem Ort x dargestellt, wie sie von dem optischen Sensor 16 aufgenommen wird. In dem gezeigten Beispiel besitzt der optische Sensor 16 eine Messzeile mit N=300 Pixeln. Das in Fig. 3 mittlere Diagramm zeigt die erste Ableitung des Intensitätsverlaufs aus dem oberen Diagramm nach dem Ort. Die Ableitung wurde dabei als Differenzenquotient nach der folgenden Formel berechnet:

$$\frac{dI}{dx} = \frac{I(n+1) - I(n)}{x(n+1) - x(n)} \quad mit \ n = 1...299$$

In dem mittleren Diagramm ist die nach dem Ort abgeleitete Intensität über der linearen Ortsachse x aufgetragen. Dieser Verlauf wird nun über eine quadrierte x-Achse, nämlich $(x - x_{geo})^2$, aufgetragen. Insbesondere wird den in dem oberen Diagramm in Fig. 3 auf der Ordinate aufgetragenen Intensitätswerten als Abszissenwert jeweils ein Wert zugeordnet, der sich aus ihrem in dem oberen Diagramm von Fig. 3 jeweils zugeordneten x-Wert durch die Funktion $(x - x_{geo})^2$ ergibt. Dadurch erhält man den in Fig. 3 im unteren Diagramm dargestellten, näherungsweise sinusförmigen Signalverlauf.

Dies gilt allerdings nur, sofern die geometrische Schattengrenze $x_{geo}$ bereits aufgefunden wurde und das in Fig. 3 untere Diagramm mit der geometrischen Schattengrenze $x_{geo}$ als Ursprung aufgetragen wird. Sofern die geometrische Schattengrenze noch nicht bekannt ist, was insbesondere zu Beginn der erfindungsgemäßen Auswertung regelmäßig der Fall ist, ergibt sich im unteren Diagramm von Fig. 3 noch kein sinusförmiger Verlauf. Vielmehr zeigt die Frequenz des gemäß dem unteren Diagramm von Fig. 3 aufgetragenen Verlaufs dann noch eine Ortsabhängigkeit, insbesondere nimmt die Frequenz mit dem Ort zu. Für die erfindungsgemäße Auswertung wird für den in der Regel zunächst noch nicht sinusförmigen, gemäß dem unteren Diagramm von Fig. 3 aufgetragenen Verlauf die Phasenverschiebung $(x - x_{geo})$ so lange variiert bis sich ein (periodischer) Sinusverlauf ergibt. Die erforderliche Phasenverschiebung ist die gesuchte geometrische Schattengrenze $x_{geo}$, die zu diesem Zeitpunkt allerdings noch nicht als Absolutwert bekannt ist. Dieser in Fig. 3 bereits gefundene und dargestellte Sinusverlauf wird daher beispielsweise mit einer Schar sinusförmiger Referenzverläufe verglichen, bis eine optimale Übereinstimmung zwischen dem aufgenommenen Intensitätsverlauf und einem sinusförmigen Referenzverlauf vorliegt. Damit ist dann auch der Absolutwert der geometrischen Schattengrenze bestimmt. Im Zuge der erfindungsgemäßen Auswertung erfolgen die Korrelation und die Verschiebung der Phasenverschiebung $(x - x_{geo})$ parallel, wie weiter unten noch näher erläutert werden wird. Gegebenenfalls muss auch die Frequenz variiert werden, um auch den Abstand des Stranges 10 von dem optischen Sensor 16 zu kennen. Sind die Frequenz und die Phasenverschiebung des im unteren Diagramm von Fig. 3 dargestellten Intensitätsverlaufs bekannt, lässt sich hieraus der Durchmesser des Stranges 10 bestimmen, wie ebenfalls oben erläutert.

Der Vergleich kann dabei in besonders einfacher Weise mittels einer Phasenregelschleife (Phase Locked Loop PLL) erfolgen. Ein entsprechender Messaufbau ist in Fig. 4 gezeigt. Bei dem Bezugszeichen 30 ist dabei ein Multiplizierer gezeigt und bei dem Bezugszeichen 32 ein Tiefpass. Bei dem Bezugszeichen 34 ist ein spannungsgesteuerter Oszillator (Voltage Controlled Oscillator VCO) dargestellt. Mit der in Fig. 4 gezeigten Phasenregelschleife kann in an sich bekannter Weise eine erforderliche Frequenzänderung und/oder eine erforderliche Phasenverschiebung für einen optimalen Abgleich zwischen dem aufgenommenen und mathematisch bearbeiteten Intensitätsverlauf und einem sinusförmigen Referenzverlauf ermittelt werden. Die Funktion von Phasenregelschleifen ist dem Fachmann an sich bekannt, so dass diese nicht näher erläutert wird. Zur weiteren Vereinfachung der Auswertung ist es auch möglich, das im unteren Diagramm in Fig. 3 dargestellte Signal zu einem Rechteckverlauf zu digitalisieren und einer digitalen Phasenregelschleife zuzuführen.

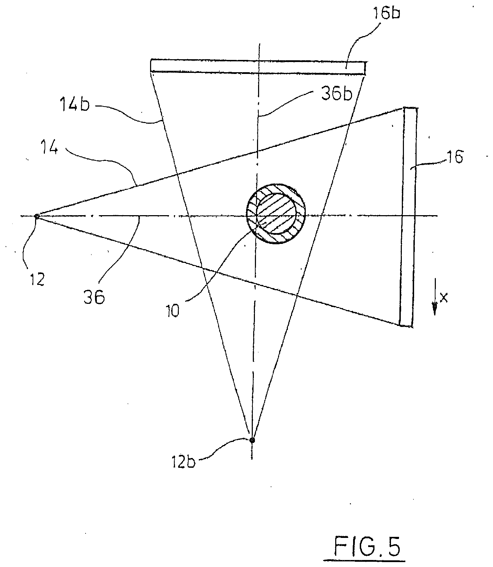

In Fig. 5 ist eine weitere Ausgestaltung einer Vorrichtung zur Durchführung des erfindungsgemäßen Verfahrens gezeigt. Dort ist eine zweite kohärente, monochromatische punktförmige Lichtquelle 12b, beispielsweise ebenfalls eine Laserdiode, dargestellt, die ebenfalls einen fächerförmigen Lichtstrahl 14b erzeugt. In Fig. 5 ist zu erkennen, dass die Hauptstrahlrichtung der Lichtquelle 12b, in Fig. 5 bei dem Bezugszeichen 36b gezeigt, senkrecht auf der bei dem Bezugszeichen 36 gezeigten Hauptstrahlrichtung der Lichtquelle 12 steht. Ein zweiter optischer Sensor 16b, beispielsweise ebenfalls ein CCD-Zeilensensor, nimmt das von der zweiten Lichtquelle 12b ausgesandte kohärente, monochromatische Licht auf. Die durch die Zeile des Zeilensensors 16b gebildete Messachse liegt dabei senkrecht auf der Hauptstrahlrichtung 36b der zweiten Lichtquelle 12b. Mit dieser Vorrichtung lässt sich erfindungsgemäß nicht nur der Durchmesser des Stranges 10 an zwei Stellen messen, sondern es kann auch der Abstand zwischen dem Strang 10 und dem Zeilensensor 16 bzw. dem Zeilensensor 16b bestimmt werden, der bei einer Vorbewegung des Strangs 10 naturgemäß Schwankungen unterliegt. Die Intensitätsverläufe in den Beugungssäumen beidseits des auf die Empfangszeilen projizierten Strangschattens sind annähernd symmetrisch. Somit kann zum Beispiel aus den Positionen sich spiegelbildlich im linken bzw. rechten Beugungssaum gegenüberliegender Merkmalspunkte auf die Mittenposition des projizierten Schattens geschlossen werden. Auf der Verbindungslinie zwischen dieser Position und der Laserdiode 12 befindet sich der Strang 10. Eine entsprechende Verbindungslinie kann für die um 90° gedrehte Messanordnung der Lichtquelle 12b konstruiert werden. Der Schnittpunkt beider Linien stellt die Mittenlage des Strangs 10 im Messraum dar. Damit ist der Abstand zum jeweiligen Zeilensensor 16 bzw. 16b bekannt. Da, wie oben erläutert, dieser Abstand unmittelbar mit der Frequenz des im unteren Diagramm von Fig. 3 gezeigten Intensitätsverlaufs zusammenhängt, muss bei Verwendung dieser Messanordnung zu dem im unteren Diagramm von Fig. 3 gezeigten Intensitätsverlauf nur noch die Phasenverschiebung ermittelt werden. Dies vereinfacht die Auswertung.

Wie weiterhin unmittelbar aus den Figuren ersichtlich, sind dabei zwischen den Lichtquellen 12, 12b und dem Strang 10 einerseits sowie zwischen dem Strang 10 und den optischen Sensoren 16, 16b andererseits keine die Lichtstrahlung verformenden oder ablenkenden optischen Elemente, insbesondere abbildenden optischen Elemente, vorgesehen. Der Aufbau wird dadurch weiter vereinfacht.

In Figur 6 ist ein Diagramm zur Veranschaulichung des ersten Aspekts des erfindungsgemäßen Verfahrens gezeigt. Erkennbar beginnt das erfindungsgemäße Verfahren auf Grundlage eines gemessenen Beugungsverlaufs, wie er beispielsweise in dem oberen Diagramm von Figur 3 dargestellt ist. Im nächsten Schritt erfolgt eine Differentiation nach dem Ort, wobei sich ein Verlauf ergibt, wie er auch in dem mittleren Diagramm von Figur 3 dargestellt ist. Anschließend erfolgt eine Skalierung über eine quadratische Ortsachse $(x-x_{geo})^2$, wobei sich in der Regel zunächst noch nicht der in Figur 6 bzw. in dem unteren Diagramm von Figur 3 gezeigte sinusförmige Verlauf ergibt, wie oben erläutert. Im Zuge der erfindungsgemäßen Auswertung wird nun ein sinusförmiger Referenzverlauf mit dem gemessenen Beugungsverlauf, wie er sich in dem Diagramm der Fig. 6 nach dem Block "Skalierung über quadratische Ortsachse" ergibt, verglichen, insbesondere über den gemessenen Beugungsverlauf, wie er sich in dem Diagramm der Fig. 6 nach dem Block "Skalierung über quadratische Ortsachse" ergibt, geschoben, bis eine optimale Übereinstimmung vorliegt. Dabei wird derjenige periodische sinusförmige Referenzverlauf gesucht, der optimal mit dem wie erläutert mathematisch bearbeiteten gemessenen Beugungsverlauf übereinstimmt. Parallel wird der Parameter $x_{geo}$ der quadratischen Ortsachse nachgeführt (je nachdem wo der Nullpunkt des Referenzverlaufs im Korrelationsprozess gerade liegt). Die Korrelation kann beispielsweise in einer Phasenregelschleife (phase-locked loop (PLL)) erfolgen. Im Zuge der Korrelation kann die erfolgte Phasenverschiebung bestimmt werden. Diese Phasenverschiebung entspricht, wie oben erläutert, der gesuchten geometrischen Schattengrenze $x_{geo}$.

Das in Figur 7 gezeigte Diagramm veranschaulicht den zweiten Aspekt des erfindungsgemäßen Verfahrens. Erkennbar startet auch dieses Verfahren mit einem gemessenen Beugungsverlauf, wie zu Figur 6 erläutert. Weiterhin erfolgt auch hierbei zunächst eine Differentiation nach dem Ort, wie zu Figur 6 erläutert. Bei dem in Figur 7 veranschaulichten zweiten Aspekt des erfindungsgemäßen Verfahrens erfolgt nun allerdings eine Korrelation dieses differenzierten gemessenen Beugungsverlauf mit einem Referenzverlauf, der sich in dem vorliegenden Beispiel ergibt, indem ein Sinusverlauf derart über dem Ort aufgetragen wird, dass seine Periodenlänge im Wesentlichen umgekehrt linear ortsabhängig ist. Im Zuge dieser Korrelation wird wiederum derjenige Referenzverlauf gesucht, der am besten zu dem gemessenen und mathematisch bearbeiteten Beugungsverlauf passt. Auf dieser Grundlage kann dann wiederum der zu den Referenzverläufen beispielsweise empirisch ermittelte und hinterlegte Absolutwert der geometrischen Schattengrenze $x_{geo}$ bestimmt werden.

Aus den Figuren 6 und 7 wird nochmals deutlich, dass allen Aspekten des erfindungsgemäßen Verfahrens dieselbe Idee zugrunde liegt. Diese liegt darin, dass durch zwei Operationen bzw. ihre Umkehrungen aus den gemessenen Beugungsverläufen Sinusverläufe erstellt werden können bzw. umgekehrt. Diese Grundidee vereinfacht und beschleunigt die erfindungsgemäße Auswertung der Beugungsmuster, wie oben erläutert.

**Patentansprüche**

1. Verfahren zur Bestimmung der Lage mindestens einer Kante eines Gegenstandes (10), insbesondere eines Stranges (10), umfassend die Schritte:

   - Beleuchten des Gegenstandes (10) mit Licht mindestens einer kohärenten Lichtquelle (12, 12b), wobei an den beiden geometrischen Grenzen des vom Gegenstand (10) verursachten Schattens Beugungssäume (22) erzeugt werden,
   - Aufnehmen des räumlichen Intensitätsverlaufs mindestens eines Beugungssaums (22) mit mindestens einem ein- oder mehrzeiligen optischen Sensor (16, 16b),
   - der mindestens eine aufgenommene Intensitätsverlauf wird nach dem Ort differenziert und über einer quadratischen Ortsachse aufgetragen,
   - Vergleichen des nach dem Ort differenzierten und über der quadratischen Ortsachse aufgetragenen mindestens einen aufgenommenen Intensitätsverlaufs mit mindestens einem periodischen Referenzintensitätsverlauf,
   - Bestimmen der Lage mindestens einer Kante des Gegenstandes (10) auf Grundlage des erfolgten Vergleichs.

2. Verfahren zur Bestimmung der Lage mindestens einer Kante eines Gegenstandes (10), insbesondere eines Stranges (10), umfassend die Schritte:

   - Beleuchten des Gegenstandes (10) mit Licht mindestens einer kohärenten Lichtquelle (12, 12b), wobei an den beiden geometrischen Grenzen des vom Gegenstand (10) verursachten Schattens Beugungssäume (22) erzeugt werden,
   - Aufnehmen des räumlichen Intensitätsverlaufs mindestens eines Beugungssaums (22) mit mindestens einem ein- oder mehrzeiligen optischen Sensor (16, 16b),
- der mindestens eine aufgenommene Intensitätsverlauf wird nach dem Ort differenziert,
- Vergleichen des nach dem Ort differenzierten mindestens einen aufgenommenen Intensitätsverlaufs mit mindestens einem Referenzintensitätsverlauf, der sich aus einer periodischen Funktion ergibt, die eine Periodenlänge mit einer im Wesentlichen umgekehrt linearen Abhängigkeit vom Ort besitzt,
- Bestimmen der Lage mindestens einer Kante des Gegenstandes (10) auf Grundlage des erfolgten Vergleichs.

3. Verfahren nach einem der vorhergehenden Ansprüche, **dadurch gekennzeichnet, dass** der Gegenstand (10) entlang seiner Längsrichtung gefördert wird und währenddessen fortlaufend die Lage des Gegenstandes (10) bestimmt wird.

4. Verfahren nach einem der vorhergehenden Ansprüche, **dadurch gekennzeichnet, dass** der mindestens eine periodische Referenzintensitätsverlauf ein sinusförmiger Referenzintensitätsverlauf ist und/oder dass die periodische Funktion eine Sinusfunktion ist.

5. Verfahren nach einem der Ansprüche 1 bis 3, **dadurch gekennzeichnet, dass** der mindestens eine periodische Referenzintensitätsverlauf ein periodischer Rechteck-, Dreieck- oder Trapezverlauf ist und/oder dass die periodische Funktion eine periodische Rechteck-, Dreieck- oder Trapezfunktion ist.

6. Verfahren nach einem der vorhergehenden Ansprüche, **dadurch gekennzeichnet, dass** vor dem Vergleich mit dem Referenzintensitätsverlauf durch Amplitudenbegrenzung ein binäres Signal aus dem aufgenommenen Intensitätsverlauf erzeugt wird.

7. Verfahren nach einem der vorhergehenden Ansprüche, **dadurch gekennzeichnet, dass** im Zuge des Vergleichs ein die jeweilige geometrische Grenze des durch den Gegenstand (10) verursachten Schattens charakterisierender Parameter des mindestens einen aufgenommenen Intensitätsverlaufs und/oder des mindestens einen Referenzintensitätsverlaufs bis zu einer möglichst weitgehenden Übereinstimmung der miteinander verglichenen Intensitätsverläufe variiert wird.

8. Verfahren nach Anspruch 7, **dadurch gekennzeichnet, dass** die Variation des die geometrische Grenze des durch den Gegenstand (10) verursachten Schattens charakterisierenden Parameters jeweils mit dem Wert beginnt, der bei einer unmittelbar vorangegangenen Variation zu einer möglichst weitgehenden Übereinstimmung mit dem Referenzintensitätsverlauf geführt hat.

9. Verfahren nach einem der vorhergehenden Ansprüche, **dadurch gekennzeichnet, dass** im Zuge des durchgeführten Vergleichs die Phasenlage und/oder die Frequenz des mindestens einen aufgenommenen Intensitätsverlaufs und/oder des mindestens einen Referenzintensitätsverlaufs variiert wird.

10. Verfahren nach einem der vorhergehenden Ansprüche, **dadurch gekennzeichnet, dass** beide geometrischen Schattengrenzen des vom Gegenstand (10) verursachten Schattens bestimmt werden und/oder dass der Abstand des Gegenstandes (10) von dem mindestens einen optischen Sensor (16, 16b) bestimmt wird.

11. Verfahren nach Anspruch 10, **dadurch gekennzeichnet, dass** der Gegenstand (10) mit Licht mindestens einer zweiten kohärenten Lichtquelle (12b) beleuchtet wird, deren Hauptstrahlrichtung (36b) im Wesentlichen senkrecht zu der Hauptstrahlrichtung (36) der ersten kohärenten Lichtquelle (12) ist, wobei auch durch die zweite kohärente Lichtquelle (12b) an den beiden geometrischen Grenzen des vom Gegenstand (10) verursachten Schattens Beugungssäume (22) erzeugt werden, wobei der räumliche Intensitätsverlauf mindestens eines durch die zweite kohärente Lichtquelle erzeugten Beugungssaums (22) mit mindestens einem zweiten ein- oder mehrzeiligen optischen Sensor (16b) aufgenommen wird, und dass hieraus der Abstand des Gegenstandes (10) von dem ersten optischen Sensor (16) bestimmt wird.

12. Verfahren nach einem der vorhergehenden Ansprüche, **dadurch gekennzeichnet, dass** der durchgeführte Vergleich mittels einer Phasenregelschleife (PLL) erfolgt.

13. Verfahren nach einem der vorhergehenden Ansprüche, **dadurch gekennzeichnet, dass** die mindestens eine kohärente Lichtquelle (12, 12b) im Wesentlichen punktförmig ist und/oder dass der Gegenstand (10) mit einem fächerförmigen Lichtstrahl (14, 14b) beleuchtet wird.

**14.** Verfahren nach Anspruch 13, **dadurch gekennzeichnet, dass** zwischen der mindestens einen kohärenten Lichtquelle (12, 12b) und dem Gegenstand (10) und/oder zwischen dem Gegenstand (10) und dem mindestens einen optischen Sensor (16, 16b) keine die Lichtstrahlung verformenden oder ablenkenden optischen Elemente vorgesehen sind.

**15.** Verfahren nach einem der vorhergehenden Ansprüche, **dadurch gekennzeichnet, dass** der Gegenstand (10) zumindest teilweise transparent ist und/oder dass der Gegenstand (10) einen Durchmesser von weniger als 1 mm, vorzugsweise weniger als 0,5 mm, besitzt.

**Claims**

**1.** Method for determining the position of at least one edge of an object (10), in particular a strand (10), comprising the steps:

- illuminating the object (10) with light from at least one coherent light source (12, 12b), diffraction fringe (22) being generated at the two geometric boundaries of the shadow caused by the object (10),
- recording the spatial intensity profile of at least one diffraction fringe (22) with at least one single-line or multi-line optical sensor (16, 16b),
- the at least one recorded intensity curve is differentiated according to the location and plotted over a quadratic local axis,
- comparison of the at least one recorded intensity curve differentiated according to the location and plotted over the quadratic local axis with at least one periodic reference intensity curve,
- determining the position of at least one edge of the object (10) on the basis of the comparison made.

**2.** Method for determining the position of at least one edge of an object (10), in particular a strand (10), comprising the steps:

- illuminating the object (10) with light from at least one coherent light source (12, 12b), diffraction fringes (22) being produced at the two geometric boundaries of the shadow caused by the object (10),
- recording the spatial intensity profile of at least one diffraction fringe (22) with at least one single-line or multi-line optical sensor (16, 16b),
- the at least one recorded intensity curve is differentiated according to the location,
- comparing the at least one recorded intensity profile differentiated according to the location with at least one reference intensity profile which results from a periodic function which has a period length with a substantially inversely linear dependence on the location,
- determining the position of at least one edge of the object (10) on the basis of the comparison made.

**3.** Method according to one of the preceding claims, **characterized in that** the object (10) is conveyed along its longitudinal direction and during which the position of the object (10) is continuously determined.

**4.** Method according to one of the preceding claims, **characterized in that** the at least one periodic reference intensity profile is a sinusoidal reference intensity profile and/or **in that** the periodic function is a sinusoidal function.

**5.** Method according to one of the claims 1 to 3, **characterized in that** the at least one periodic reference intensity profile is a periodic rectangular, triangular or trapezoidal profile and/or **in that** the periodic function is a periodic rectangular, triangular or trapezoidal function.

**6.** Method according to one of the preceding claims, **characterized in that**, before the comparison with the reference intensity profile, a binary signal is generated from the recorded intensity profile by amplitude limitation.

**7.** Method according to one of the preceding claims, **characterized in that**, in the course of the comparison, a parameter of the at least one recorded intensity profile and/or of the at least one reference intensity profile characterizing the respective geometric boundary of the shadow caused by the object (10) is varied until the intensity profiles compared with one another coincide as closely as possible.

**8.** Method according to claim 7, **characterized in that** the variation of the parameter characterizing the geometric boundary of the shadow caused by the object (10) begins in each case with the value which, in the case of an immediately preceding variation, has led to the greatest possible correspondence with the reference intensity profile.

9. Method according to one of the preceding claims, **characterized in that**, in the course of the comparison carried out, the phase position and/or the frequency of the at least one recorded intensity profile and/or of the at least one reference intensity profile is varied.

10. Method according to one of the preceding claims, **characterized in that** both geometric shadow boundaries of the shadow caused by the object (10) are determined and/or **in that** the distance of the object (10) from the at least one optical sensor (16, 16b) is determined therefrom.

11. Method according to claim 10, **characterized in that** the object (10) is illuminated with light from at least one second coherent light source (12b) whose main beam direction (36b) is substantially perpendicular to the main beam direction (36) of the first coherent light source (12), diffraction fringe (22) also being generated by the second coherent light source (12b) at the two geometric boundaries of the shadow caused by the object (10), the spatial intensity profile of at least one diffraction fringe (22) generated by the second coherent light source being recorded by at least one second single-line or multi-line optical sensor (16b), and **in that** the distance of the object (10) from the first optical sensor (16) is determined therefrom.

12. Method according to one of the preceding claims, **characterized in that** the comparison carried out is carried out by means of a phase-locked loop (PLL).

13. Method according to one of the preceding claims, **characterized in that** the at least one coherent light source (12, 12b) is substantially point-shaped and/or **in that** the object (10) is illuminated with a fan-shaped light beam (14, 14b).

14. Method according to claim 13, **characterized in that** no optical elements deforming or deflecting the light radiation are provided between the at least one coherent light source (12, 12b) and the object (10) and/or between the object (10) and the at least one optical sensor (16, 16b).

15. Method according to one of the preceding claims, **characterized in that** the object (10) is at least partially transparent and/or **in that** the object (10) has a diameter of less than 1 mm, preferably less than 0.5 mm.

**Revendications**

1. Procédé pour la détermination de la position d'au moins un bord d'un objet (10), en particulier d'un cordon (10), comportant les étapes suivantes :

   - éclairage de l'objet (10) avec de la lumière d'au moins une source de lumière cohérente (12, 12b), moyennant quoi des franges de diffraction (22) sont produites sur les deux limites géométriques de l'ombre créée par l'objet (10),
   - enregistrement de la courbe d'intensité spatiale d'au moins une frange de diffraction (22) avec au moins un capteur optique à une ou plusieurs lignes (16, 16b),
   - l'au moins une courbe d'intensité enregistrée est différenciée selon le lieu et appliquée sur un axe de lieu quadratique,
   - comparaison de l'au moins une courbe d'intensité enregistrée différenciée selon le lieu et appliquée sur l'axe de lieu quadratique avec au moins une courbe d'intensité de référence périodique,
   - détermination de la position d'au moins un bord de l'objet (10) sur la base de la comparaison effectuée.

2. Procédé pour la détermination de la position d'au moins un bord d'un objet (10), en particulier d'un cordon (10), comportant les étapes suivantes :

   - éclairage de l'objet (10) avec de la lumière d'au moins une source de lumière cohérente (12, 12b), moyennant quoi des franges de diffraction (22) sont produites sur les deux limites géométriques de l'ombre créée par l'objet (10),
   - enregistrement de la courbe d'intensité spatiale d'au moins une frange de diffraction (22) avec au moins un capteur optique à une ou plusieurs lignes (16, 16b),
   - l'au moins une courbe d'intensité enregistrée est différenciée selon le lieu,
   - comparaison de l'au moins une courbe d'intensité enregistrée différenciée selon le lieu avec au moins une courbe d'intensité de référence, laquelle est obtenue à partir d'une fonction périodique présentant une longueur de période avec une dépendance essentiellement inversement linéaire du lieu,
- détermination de la position d'au moins un bord de l'objet (10) sur la base de la comparaison effectuée.

3. Procédé selon l'une des revendications précédentes, **caractérisé en ce que** l'objet (10) est transporté le long de sa direction longitudinale et la position de l'objet (10) est déterminée continuellement dans le même temps.

4. Procédé selon l'une des revendications précédentes, **caractérisé en ce que** l'au moins une courbe d'intensité de référence périodique est une courbe d'intensité de référence sinusoïdale et/ou **en ce que** la fonction périodique est une fonction sinusoïdale.

5. Procédé selon l'une des revendications 1 à 3, **caractérisé en ce que** l'au moins une courbe d'intensité de référence périodique est une courbe rectangulaire, triangulaire ou trapézoïdale périodique et/ou **en ce que** la fonction périodique est une fonction rectangulaire triangulaire ou trapézoïdale périodique.

6. Procédé selon l'une des revendications précédentes, **caractérisé en ce qu'**avant la comparaison avec la courbe d'intensité de référence, un signal binaire est généré à partir de la courbe d'intensité enregistrée par limitation d'amplitude.

7. Procédé selon l'une des revendications précédentes, **caractérisé en ce qu'**au cours de la comparaison, un paramètre de l'au moins une courbe d'intensité enregistrée et/ou de l'au moins une courbe d'intensité de référence, caractérisant la limite géométrique respective de l'ombre créée par l'objet (10), est modifié jusqu'à une concordance aussi large que possible des courbes d'intensité comparées entre elles.

8. Procédé selon la revendication 7, **caractérisé en ce que** la modification du paramètre caractérisant la limite géométrique de l'ombre créée par l'objet (10) commence respectivement avec la valeur ayant permis d'obtenir une concordance aussi large que possible avec la courbe d'intensité de référence lors d'une modification immédiatement précédente.

9. Procédé selon l'une des revendications précédentes, **caractérisé en ce qu'**au cours de la comparaison effectuée, la position de phase et/ou la fréquence de l'au moins une courbe d'intensité enregistrée et/ou de l'au moins une courbe d'intensité de référence est/sont modifiée(s).

10. Procédé selon l'une des revendications précédentes, **caractérisé en ce que** les deux limites d'ombre géométriques de l'ombre créée par l'objet (10) sont déterminées et/ou **en ce que** le distance entre l'objet (10) et l'au moins un capteur optique (16, 16b) est déterminé.

11. Procédé selon la revendication 10, **caractérisé en ce que** l'objet (10) est éclairé avec de la lumière d'au moins une deuxième source de lumière cohérente (12b), dont la direction de rayonnement principale (36b) est essentiellement perpendiculaire à la direction de rayonnement principale (36) de la première source de lumière cohérence (12), moyennant quoi des franges de diffraction (22) sont également produites par la deuxième source de lumière cohérente (12b) sur les deux limites géométriques de l'ombre créée par l'objet (10), la courbe d'intensité spatiale d'au moins une frange de diffraction (22) produite par la deuxième source de lumière cohérente étant enregistrée avec au moins un deuxième capteur optique à une ou plusieurs lignes (16b), et **en ce que** la distance entre l'objet (10) et le premier capteur optique (16) est ainsi déterminée.

12. Procédé selon l'une des revendications précédentes, **caractérisé en ce que** la comparaison effectuée est réalisée à l'aide d'une boucle à verrouillage de phase (PLL).

13. Procédé selon l'une des revendications précédentes, **caractérisé en ce que** l'au moins une source de lumière cohérente (12, 12b) est essentiellement ponctuelle et/ou **en ce que** l'objet (10) est éclairé avec un faisceau lumineux en éventail (14, 14b).

14. Procédé selon la revendication 13, **caractérisé en ce qu'**aucun élément optique déviant ou déformant le rayonnement lumineux n'est prévu entre l'au moins une source de lumière cohérente (12, 12b) et l'objet (10) ni/ou entre l'objet (10) et l'au moins un capteur optique (16, 16b).

15. Procédé selon l'une des revendications précédentes, **caractérisé en ce que** l'objet (10) est au moins partiellement transparent et/ou **en ce que** l'objet (10) présente un diamètre inférieur à 1 mm, de préférence inférieur à 0,5 mm.

FIG.1

FIG.2

FIG.3

FIG.4

FIG.5

FIG.6

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0924493 B1

- US 2005117162 A1